Europäisches Patentamt

European Patent Office

Office européen des brevets

(19)

(11) Publication number: **0 028 114**

**B1**

(12) # EUROPEAN PATENT SPECIFICATION

(45) Date of publication of patent specification: 04.04.84    (51) Int. Cl.³: **G 01 F 23/28**

(21) Application number: **80303701.9**

(22) Date of filing: **20.10.80**

(54) **Liquid level sensor.**

(30) Priority: **29.10.79 GB 7937413**

(43) Date of publication of application:
**06.05.81 Bulletin 81/18**

(45) Publication of the grant of the patent:
**04.04.84 Bulletin 84/14**

(84) Designated Contracting States:
**BE CH DE FR GB LI NL SE**

(56) References cited:
**GB - A - 809 681**
**GB - A - 873 538**
**GB - A - 1 555 549**
**US - A - 2 713 263**
**US - A - 3 010 318**
**US - A - 3 520 186**
**US - A - 4 159 420**

(73) Proprietor: **Bestobell (UK) Limited**
**16 Bath Road**
**Slough, Berks. SL1 3SS (GB)**

(72) Inventor: **Palmer, Stuart Beaumont**
**171 Newland Park**
**Hull, N.Humberside (GB)**
Inventor: **Primavesi, Gregory Jude**
**5 Station Road Theale**
**Reading, RG7 4AA (GB)**

(74) Representative: **Skone James, Robert Edmund
et al,**
**GILL JENNINGS & EVERY 53-64 Chancery Lane**
**London WC2A 1HN (GB)**

Courier Press, Leamington Spa, England.

## Liquid level sensor

The invention relates to liquid level sensors of the kind which are used with liquid containers and provide an electrical signal representative of the presence of liquid at an adjacent level in the container.

Historically such sensors have been made in the form of float operated switches but these involve moving parts which are subject to friction and wear. More recently ultrasonic sensors have been used. These typically involve the transmission across a gap of an ultrasonic signal, the signal being transmitted from a transmitting transducer across a gap towards a receiving transducer, the signal being received at the receiving transducer when liquid is present in the gap but not when air is present in the gap. Generally, failure in the electronics, in the piezoelectric or other transducer or in the cables produces a lack of signal from the receiving transducer, which is the normal failure mode, and appears to indicate a dry or no liquid present state. In various applications it is an advantage to have the failure mode to correspond to the same state as when liquid is present in the gap. For example, for high level alarms in tanks and boilers, it is desirable to make the fault condition equivalent to an alarm condition. This is particularly necessary for high level alarms on chemical tanks on board ships.

It has previously been proposed to propagate ultrasonic shear waves in the wall of a liquid-carrying pipe in order to transmit a portion of the signal into the liquid and to obtain a reflected signal, as a result of the Doppler effect, from the moving liquid and hence obtain a measurement of the flow velocity along the pipe.

There are also references in the literature to measuring liquid level by means of a sensor, hereinafter referred to as of the kind described, comprising a probe made of a material capable of conducting an ultrasonic signal and which is arranged to be fitted to a liquid container with the outer surface of the probe exposed to the interior of the container; a transmitting transducer and a receiving transducer coupled to the probe so that an ultrasonic signal can be transmitted from the transmitted transducer to the receiving transducer along a path through the probe; means for energizing the transmitting transducer; and detector means coupled to the receiving transducer for distinguishing between a level of received signal corresponding to exposure of the peripheral wall to liquid and a level of received signal corresponding to exposure of the peripheral wall to gas, and for producing a corresponding electrical output. A sensor of this kind is disclosed in GB—A—873,538, but in that case the probe is a rod extending fully through the container from top to bottom with the transducers coupled one to each end of the rod. This is a clumsy, space-consuming and impractical construction.

Another kind of sensor, disclosed in US—A—2,713,263, has a tubular probe which dips into the liquid contents of a container so that the liquid rises up within the probe. A compression wave is transmitted down the probe from a transducer mounted around the upper end of the probe outside the container, the wave being reflected at the liquid interface and being received again by the transducer and the liquid level being computed from the flight time. However this operates on a different principle from a sensor of the kind described and is no assistance in improving the sensor of GB—A—873,538.

In accordance with the invention, a sensor of the kind described is characterized in that the probe is hollow with a tubular peripheral wall in which probe the transducers are sealed from the interior of the container, and that the transducers are coupled to the inner surface of the wall at angularly spaced locations so that the signal path is around the wall.

This construction is compact and efficient.

The sensor according to the invention operates on the principle that at a solid/liquid interface there is a mismatch of the ultrasonic impedance of the two media. If an ultrasonic wave is present in the solid at such an interface, some of the ultrasonic energy is transmitted into the liquid. At a solid/gas interface the mismatch of the ultrasonic impedance of the two media is very much greater than that with a solid/liquid interface. Virtually no energy is transmitted through the interface into the air or other gas. With a construction in accordance with the invention therefore a low signal at the receiving transducer indicates liquid presence on the outside of the probe, and a high signal liquid absence, so that under failure conditions, which is normally a lack of signal received, the sensor indicates an apparent liquid presence. This is the desired failure mode for a high level alarm. Electronics of conventional design may be used to detect the difference between the signal received when the probe wall is immersed in air and immersed in liquid and this difference is large enough to be greater than any other effects caused by drift of electronic components characteristics, temperature, and transducer ageing. The system is also substantially fail safe in respect of any drift or residue on the external wall surface of the probe and of discontinuities in the liquid.

The ultrasonic signal will be directed from the transmitting transducer through the radially inner surface of the peripheral wall and be propagated around the wall. The exact manner of propagation of the signal in the wall is not entirely certain but it is believed to be in the form of a plate or Lamb wave corresponding to surface waves around both the inner and outer surfaces of the wall. Plate waves may be considered to include longitudinal and shear wave components and according to the theory each of these modes is partially converted to the other upon reflection at an interface. In spite of the complexity of the propagation theory, the peripheral wall is found effectively to act as a wave guide from which ultrasonic energy is lost to an extent depending upon the medium in contact with the outer surface of the wall. As a purely pictorial representation however it is convenient to imagine the ultrasonic signal being transmitted around the wall along a zig-zag path involving multiple internal reflections at the radially inner and outer surfaces of the wall.

At least the transmitting transducer is preferably a P-wave transducer, that is one which primarily transmits longitudinal waves.

The tubular construction of the probe in accordance with the invention is particularly advantageous. Thus the probe is a self-contained unit which is sealed to and suspended, e.g. from the top wall of the container so as to provide a sealed, clean and robust housing for the transducers and their lead wires which will normally extend in a sealed conduit out through the top wall of the container to associated electronic equipment. The transmission of the ultrasonic signal around the peripheral wall of the probe enables an appreciably long transmission path in a compact construction so that the probe takes up comparatively little space within the container. Thus the transmitting and receiving transducers may be so angularly spaced that the path extends through 180° or more circumferentially around the peripheral wall of the probe from the transmitting transducer to the receiving transducer. Both transducers may be potted in a common body of, for example, epoxy resin, bonded to the inner surface of the peripheral wall. This maximizes the length of a single transmission path from the transmitting transducer to the receiving transducer. Alternatively, however, the transmitting and receiving transducers could be mounted separately at diametrically opposite positions on the inner surface of the peripheral wall so that two similar transmission paths are provided in different directions around the wall from the transmitting transducer to the receiving transducer. The full circumference of the wall is thus used for the transmission of the signal, thereby providing greater sensitivity of signal attenuation.

The transmitting and receiving transducers are preferably both piezoelectric crystals, and may be substantially identical to one another. When the signal is to be propagated along a single path in one direction around the peripheral wall, the two transducers are preferably bonded to the inner surface of the peripheral wall at relative orientations so that they preferentially transmit the ultrasonic signal in the peripheral wall along the path, and receive an ultrasonic signal approaching along the path, respectively. In other words the transducers will be mounted so that their axis of signal propagation/reception is inclined to the normal to the inner surface of the peripheral wall, in a plane perpendicular to the axis of the tubular peripheral wall. At least the transmitting transducer is preferably so oriented that the ultrasonic signal leaves the transducer at an angle of between 2° and 15°, preferably substantially 5°, to the normal to the adjacent part of the radially inner wall surface.

Best results appear to be obtained when the peripheral wall is made of stainless steel having a thickness in the range of between 1.5 and 7.5 mm, and the transmitting transducer produces an ultrasonic signal at a frequency of 0.5—5 MHz. The peripheral wall may then have an external diameter as small as between 2 and 10 cm. This arrangement ensures that there are not too few notional reflections to provide adequate attenuation of the signal, nor so many notional reflections that the signal received by the receiving transducer has too low a signal to noise ratio.

The ultrasonic signal may be a continuous or a pulsed signal. The receiving and transmitting transducers may be connected by a feedback loop incorporating an amplifier which ensures self energization of the transmitting transducer in the liquid absent condition.

An example of a sensor constructed in accordance with the invention is illustrated diagrammatically in the accompanying drawings, in which:—

Figure 1 is a vertical axial section taken on the line I—I in Figure 2;

Figure 2 is a section taken on the line II—II in Figure 1;

Figure 3 is a section taken on the line III—III in Figure 1; and,

Figures 4 and 5 show alternative associated electrical circuit diagrams.

The sensor probe comprises a pressure tight stainless steel housing having a tubular peripheral wall 6 with a thickness of about 5mm, a bottom wall 7, and a top wall 8 forms integrally with, or welded to, a screw threaded boss 9. The probe is intended to be sealed to and suspended from the top wall of a liquid container, for example by the boss 9 screwing into a complementary screw threaded bore extending through the container top wall, or by the boss 9 screwing into the bottom of a suspension tube which is itself sealed to and extends through the container top wall, or by the boss being welded to the container top wall or suspension tube. Lead wires 10 then extend down through the top wall of the container and through the boss 9 into the interior of the housing which is completely isolated from the liquid containing interior of the container.

Within the housing the lead wires 10 are connected to a transducer assembly comprising a block of epoxy resin which is bonded with a similar material to the inner surface of the peripheral wall 6 and in which are embedded transmitting and receiving piezoelectric transducers 12 and 13 respectively.

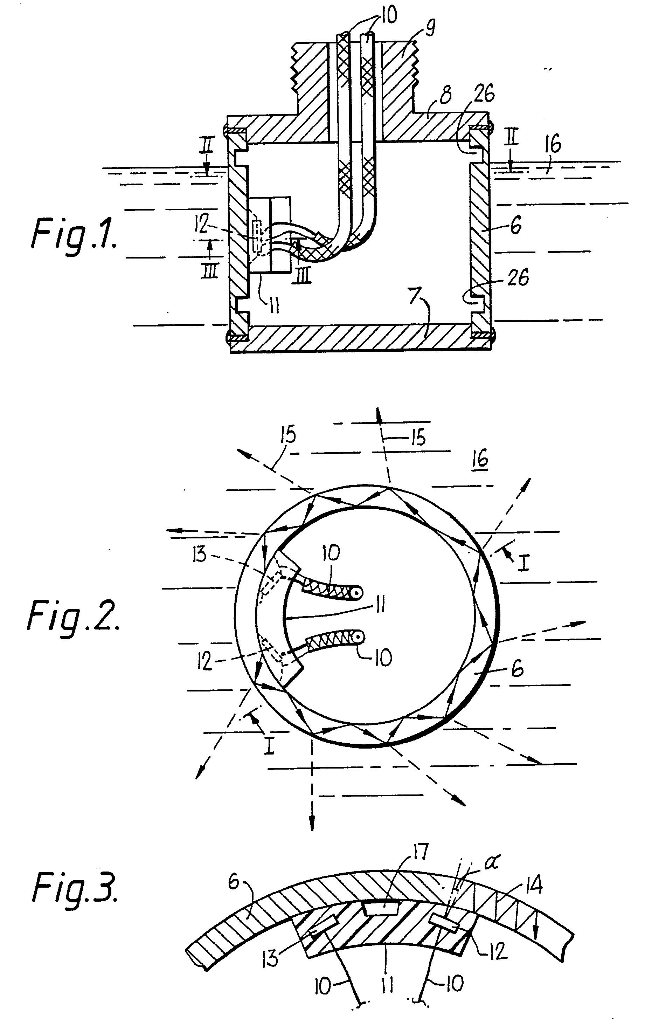

As particularly shown in Figure 3, the axes of transducers are inclined to the normal to the inner surface of the peripheral wall 6. As a result, when the transmitting transducer 12 is energized, it transmits an ultrasonic signal preferentially in one direction around the peripheral wall 6, the signal following a notional zig-zag path 14 with multiple internal reflections at the inner and outer surfaces of the wall. The angle $\alpha$ between the axis of the transmitting transducer, i.e. the direction in which the signal is initially propagated and the normal to the inner wall surface is approximately 5°. The receiving transducer 13 is similarly oriented preferentially to receive the signal after transmission around the majority of the circumference of the wall 6. The number of reflections shown in Figure 3, and particularly in Figure 2, is considerably less than those which occur in practice. As shown in Figure 2, a proportion of the acoustic energy 15 passes out through the outer surface of the wall 6 into surrounding liquid 16 when the probe is immersed in liquid. However, when the liquid level in the container falls below the probe, so that the peripheral wall of the probe at the height of the transducers 12 and 13 is exposed to gas, the signal is almost totally internally reflected at the outer surfaces of the peripheral wall and there is minimum loss of acoustic energy.

The signal is deterred from short circuiting through the top and bottom walls 8 and 7 by two annular grooves 26 in the radially inner surface of the peripheral wall 6. The grooves reduce the wall thickness at these areas to about 1 mm.

As shown in Figure 3, the body 11 of epoxy resin is somewhat U-shaped to provide a recess 17 in its radially outer surface, which assists in isolating the two transducers 12 and 13 from one another.

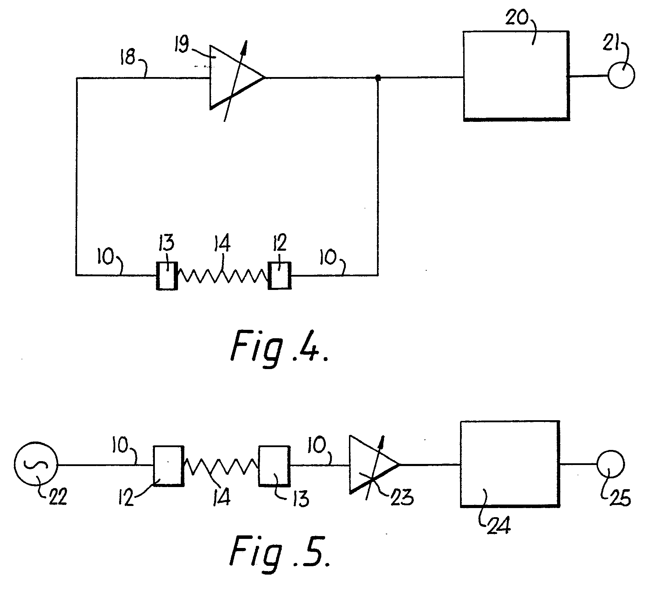

Figure 4 shows one form of associated control circuit for the probe. In this case the receiving transducer 13 is connected to the transmitting transducer 12 via a feedback loop 18 incorporating the leads 10, and also a variable gain amplifier 19. The amplifier gain is set so that when the probe is immersed in gas, the attenuation of the ultrasonic signal 14 is small so that the electrical signal output of the receiving transducer 13 is sufficient to energize the transmitting transducer 12 whereby the circuit is self energizing. Similarly when the probe is immersed in liquid, the attenuation of the ultrasonic signal 14 is so great that the electrical signal leaving the receiving transducer 13 is insufficient to maintain oscillation of the circuit. The presence or absence of oscillation in the circuit is detected by a detector 20 which provides a switched output 21.

Figure 5 shows an alternative control circuit without a feedback loop. In this case the transmitting transducer 12 is energized from a source 22 which may be a continuous or a pulsed source so that the ultrasonic signal transmitted along the path is similarly continuous or pulsed. The output from the receiving transducer 13 is fed via a variable gain amplifier 23 to a detector 24 which detects the level of electrical signal and discriminates between the level corresponding to attenuation of the signal 14 when the probe is immersed in liquid and that corresponding to attenuation of the signal 14 when the probe is immersed in gas. The detector 24 then provides a switched output 25 to indicate the presence or absence of liquid at the probe level.

**Claims**

1. A liquid level sensor comprising a probe made of a material capable of conducting an ultrasonic signal and which is arranged to be fitted to a liquid container with the outer surface of the probe exposed to the interior of the container; a transmitting transducer (12) and a receiving transducer (13) coupled to the probe so that an ultrasonic signal can be transmitted from the transmitting transducer to the receiving transducer along a path (14) through the probe; means (19, 22) for energizing the transmitting transducer; and detector means (20, 24) coupled to the receiving transducer for distinguishing between a level of received signal corresponding to exposure of the peripheral wall to liquid and a level of received signal corresponding to exposure of the peripheral wall to gas, and for producing a corresponding electrical output (21, 25); characterized in that the probe is hollow with a tubular peripheral wall (6), in which probe the transducers (12, 13) are sealed from the interior of the container, and that the transducers (12, 13) are coupled to the inner surface of the wall (6) at angularly spaced locations so that the signal path is around the wall (6).

2. A sensor according to claim 1, in which the peripheral wall (6) is made of stainless steel having a thickness of between 1.5 and 7.5 mm; and the transmitting transducer (12) produces an ultrasonic signal at a frequency of between 0.5 and 5 MHz.

3. A sensor according to claim 1 or claim 2, in which the peripheral wall (6) has an external diameter of between 2 and 10 cm.

4. A sensor according to any one of the preceding claims in which the peripheral wall (6) is provided with annular grooves (26) which reduce the wall thickness on both axial sides of the signal path.

5. A sensor according to any one of the preceding claims in which the transmitting and receiving transducers (12, 13) are piezoelectric crystal transducers and at least the transmitting piezoelectric transducer (12) is a P-wave transducer.

6. A sensor according to any one of the preceding claims in which the transmitting and receiving transducers (12, 13) are bonded to the inner surface of the peripheral wall (6) at relative orientations such that they preferentially transmit the ulstrasonic signal in the peripheral wall along the path, and receive an ultrasonic signal approaching along the path, respectively.

7. A sensor according to claim 6, in which the transmitting transducer (12) is so oriented and coupled to the peripheral wall (6) that the ultrasonic signal leaves the transducer at an angle ($\alpha$) of between 2° and 15° to the normal to the adjacent part of the radially inner wall surface.

8. A sensor according to any one of the preceding claims, in which the transmitting and receiving transducers (12, 13) are closely angularly spaced and the path extends through more than 180° circumferentially around the peripheral wall from the transmitting transducer to the receiving transducer.

9. A sensor according to claim 8, in which the transmitting and receiving transducers (12, 13) are potted in a common body (11) of epoxy resin.

10. A sensor according to any one of the preceding claims in which the energizing means and the level distinguishing means (20) are arranged to provide an output representing the presence or absence of liquid in contact with the outer surface of the peripheral wall, and provide a feedback loop (18) interconnecting the receiving and transmitting transducers (12, 13), the feedback loop incorporating an amplifier (19) which ensures energization of the transmitting transducer (12) in the liquid absent condition.

## Revendications

1. Détecteur de niveau de liquide, comprenant une sonde faite d'une matière capable de produire un signal ultrasonore et qui est agencé pour être monté dans un conteneur de liquide avec la surface extérieure de la sonde exposée à l'intérieur du conteneur, un transducteur d'émission (12) et un transducteur de réception (13) couplés avec la sonde de manière qu'un signal ultrasonore puisse être transmis depuis le transducteur d'émission vers le transducteur de réception le long d'un trajet (14) passant par la sonde, un dispositif (19, 22) pour exciter le transducteur d'émission et un dispositif détecteur (20, 24) couplé avec le transducteur de réception pour distinguer entre un niveau d'un signal reçu correspondant à l'exposition de la paroi périphérique à un liquide et un niveau du signal reçu correspondant à l'exposition dela paroi périphérique à un gaz, et produisant un signal électrique de sortie correspondant (21, 25), caractérisé en ce que la sonde est creuse avec une paroi périphérique tubulaire (6), sonde dans laquelle les transducteurs (12, 13) sont enfermés hermétiquement par rapport à l'intérieur du conteneur, et en ce que les transducteurs (12, 13) sont couplés avec la surface intérieure de la paroi (6) dans des positions espacées angulairement de manière que le trajet du signal suive le tour de la paroi (6).

2. Détecteur selon la revendication 1, dans lequel la paroi périphérique (6) est faite d'acier inoxydable ayant une épaisseur entre 1,5 et 7,5 mm, le transducteur d'émission (12) produisant un signal ultrasonore à une fréquence entre 0,5 et 5 MHz.

3. Détecteur selon la revendication 1 ou 2, dans lequel la paroi périphérique (6) a un diamètre extérieur entre 2 et 10 cm.

4. Détecteur selon l'une quelconque des revendications précédentes, dans lequel la paroi périphérique (6) est prévue avec des rainures annulaires (26) qui réduisent l'épaisseur de la paroi dans les direction axiales du trajet des signaux.

5. Détecteur selon l'une quelconque des revendications précédentes, dans lequel les transducteurs d'émission et de réception (12, 13) sont des transducteurs à cristal piézoélectrique et au moins le transducteur piézoélectrique d'émission (12) est un transducteur à ondes P.

6. Détecteur selon l'une quelconque des revendications précédentes, dans lequel les transducteurs d'émission et de réception (12, 13) sont collés sur la surface intérieure de la paroi périphérique (6) avec des orientations relatives telles qu'elles transmettent préférentiellement le signal ultrasonore dans la paroi périphérique le long du trajet, et reçoivent un signal ultrasonore s'approchant le long du trajet respectivement.

7. Détecteur selon la revendication 6, dans lequel le transducteur d'émission (12) est orienté et couplé avec la paroi périphérique (6) de manière que le signal ultrasonore quitte le transducteur sous un angle ($\alpha$) entre 2° et 15° par rapport à la normale de la partie adjacente de la surface de paroi intérieure radialement.

8. Détecteur selon l'une quelconque des revendications précédentes, dans lequel les transducteurs d'émission et de réception (12, 13) sont espacés angulairement et étroitement, et le trajet s'étendant sur plus de 180° circonferentiellement autour de la paroi périphérique depuis le transducteur d'émission jusqu'au transducteur de réception.

9. Détecteur selon la revendication 8, dans lequel les transducteurs d'émission et de réception (12, 13) sont enrobés dans une masse commune (11) de résone d'epoxyde.

10. Détecteur selon l'une quelconque des revendications précédentes, dans lequel le dispositif d'excitation et le dispositif de distinction de niveau (20) sont agencés pour produire une sortie représentant la présence ou l'absence d'un liquide en contact avec la surface extérieure de la paroi périphérique, et avec une boucle de réaction (18) interconnectant les transducteurs d'émission et de réception (12, 13), la boucle de réaction comprenant un amplificateur (19) qui assure l'excitation du transducteur d'émission (12) dans une condition d'absence de liquide.

## Patentansprüche

1. Ein Flüssigkeitspegel-Sensor (-Fühler), umfassend eine Sonde aus einem zum Leiten eines Überschallsignals geeigneten Material, die an einem Flüssigkeitsbehälter anbringbar ist, wobei die Außenfläche der Sonde dem Behälterinneren ausgesetzt ist; einen sendenden Wandler (12) und einen empfangenden Wandler (13), die mit der Sonde verbunden sind, so daß ein Überschallsignal von dem sendenden Wandler an den empfangenden Wandler über eine Bahn (14) durch die Sonde übertragbar ist; Mittel (19, 22) zum Erregen des sendenden Wandlers; und Anzeigemittel (20, 24) die mit dem empfangenden Wandler zur Unterscheidung zwischen einem Pegel empfangener Signale entsprechend der einer Flüssigkeit ausgesetzten Umfangswandung und einem Pegel empfangener Signale entsprechend der einem Gas ausgesetzten Umfangswandung verbunden sind und der Erzeugung einer entsprechenden elektrischen Ausgangsgröße (21, 25) dienen, dadurch gekennzeichnet, daß die Sonde hohl mit einer ringförmigen Wandung (6) ist, wobei die Wandler (12, 13) in der Sonde gegen das Behälterinnere abgedichtet sind, und daß die Wandler (12, 13) mit der Innenfläche der Wandung (6) an im Winkel beabstandeten Stellen verbunden sind, so daß sich die Signalbahn um die Wandung (6) herum erstreckt.

2. Ein sensor nach Anspruch 1, bei dem die Umfangswandung (6) aus rostfreiem Stahl mit einer Stärke zwischen 1,5 und 7,5 mm ausgebildet ist; und wobei der sendende Wandler (12) ein Überschallsignal mit einer Frequenz von zwischen 0,5 und 5 MHz erzeugt.

3. Ein Sensor nach Anspruch 1 oder Anspruch 2, bei dem die Umfangswandung (6) einen Außendurchmesser von zwischen 2 und 10 cm aufweist.

4. Ein Sensor nach einem der vorangehenden Ansprüche, bei dem die Umfangswandung (6) mit ringförmigen Nuten (26) versehen ist, die die Wandungsstärke zu beiden axialen Seiten der Signalbahn verringern.

5. Ein Sensor nach einem der vorangehenden Ansprüche, bei dem die sendenden und empfangenden Wandler (12, 13) piezoelektrische Kristallwandler sind und mindestens der sendende piezoelektrische Wandler (12) ein P-Wellen-Wandler ist.

6. Ein Wandler nach einem der vorangehenden Ansprüche, bei dem die sendenden und empfangenden Wandler (12, 13) mit der Innenfläche der Umfangswandung (6) in relativer Ausrichtung so verbunden sind, daß sie bevorzugt das Überschallsignal in der Umfangswandung entlang der Bahn aussenden bzw. ein entlang der Bahn ankommendes Ultraschallsignal empfangen.

7. Ein Sensor nach Anspruch 6, bei dem der sendende Wandler (12) so ausgerichtet und mit der Umfangswandung (6) verbunden ist, daß das Ultraschallsignal den Wandler unter einem Winkel ($\alpha$) von zwischen 2° und 15° zur Normalen gegenüber dem benachbarten Teil der radialen Innenwandfläche verläßt.

8. Ein Sensor nach einem der vorangehenden Ansprüche, bei dem der sendende und der empfangende Wandler (12, 13) eng im Winkel beabstandet sind und die Bahn sich umfangsmäßig über mehr als 180° um die Umfangswandung von dem sendenden Wandler zu dem empfangenden Wandler erstreckt.

9. Ein Wandler nach Anspruch 8, bei dem der sendende und der empfangende Wandler (12, 13) in einem gemeinsamen Körper (11) aus Epoxidharz vergossen sind.

10. Ein Sensor nach einem der vorangehenden Ansprüche, bei dem die Erregermittel und die Pegel-Unterscheidungsmittel (20) so angeordnet sind, daß sie einen Ausgang erzeugen, der das Vorhandensein oder Fehlen von mit der Außenfläche der Umfangswandung in Berührung befindlicher Flüssigkeit darstellt, und eine Rückkopplungsschleife (18) vorsehen, die den empfangenden und den sendenden Wandler (12, (19) umfaßt, der die Erregung des sendenden Wandlers (12) im Zustand fehlender Flüssigkeit gewährleistet.

**0 028 114**

*Fig.1.*

*Fig.2.*

*Fig.3.*

1

Fig .4.

Fig .5.